# EUROPEAN PATENT APPLICATION

(11) **EP 4 002 299 A1**
(43) Date of publication of application: **25.05.2022**
(21) Application number: 21208069.1
(22) Date of filing: 12.11.2021
(51) Int. Cl.: G06V 20/54

(54) **METHOD FOR DETECTING AND READING LICENSE PLATES**

(30) Priority: 12.11.2020 IT 202000027047
(71) Applicant: HiMarc srl, 16121 Genova (GE) (IT)
(72) Inventor: Cassolino, Caterina, 16121 Genova (GE) (IT); Maggi, Erika, 16121 Genova (GE) (IT); Della Valle, Emanuele, 16121 Genova (GE) (IT)
(74) Representative: Bottino, Giovanni

(57) **Abstract**

Method for detecting and reading license plates (31) installed on board vehicles (3) in transit or stopped along a road (2),
comprising the following steps:
- acquiring a video stream by at least one camera (12), which camera (12) is installed on a support pole (1),
- processing said video stream in order to select images or parts of images of the video stream depicting one or more license plates (31),
- recognizing one or more license plates (31)

A calibration step (100) is also included prior to the acquisition step aimed at obtaining information related to the scene which will be shot by the camera (12) .

## Description

The present invention relates to a method for detecting and reading license plates installed on board vehicles in transit or stopped along a road.

In particular, the method comprises the following steps:
- acquiring a video stream by at least one camera installed on a support pole,
- processing the video stream in order to select images or parts of images of the video stream depicting one or more license plates,
- recognizing one or more license plates.

Those just described are the generic steps common to all license plate recognition methods known in the prior art.

Such methods are used for a variety of purposes, such as checking authorised or unauthorised stops or transit of vehicles within a given area, checking vehicle traffic, as well as detecting any counterfeits or non-compliance of vehicles envisaged by applicable laws.

It is clear that the license plate recognition methods require real-time image processing and immediate identification of the letters and symbols which make up the license plate.

Such requirements are complex to meet for stopped vehicles and are even more stringent for moving vehicles, which often not only cover the area framed by the camera at different speeds, but pass from speeds commonly used during parking phases, to those related to urban and provincial traffic, but can also have a direction of travel which does not allow to fully frame the license plate based on the positioning of the camera.

Furthermore, the license plate recognition methods must be operational 24 hours a day and 7 days a week.

The present invention preferably envisages using cameras installed on public lighting poles, which generate video signals in 4k quality and which are used not only for monitoring vehicles, but also for various activities such as traffic control, citizen safety, compliance with behavioural laws.

Such cameras must therefore have frames which are as wide as possible in order to provide the services listed above, a feature which makes the identification of license plates more complex.

In fact, the parameters of the camera related to brightness, shutter and contrast must be set to ensure the best compromise between the needs of the various services: it is therefore not possible to obscure the images to avoid blindness caused by the reflective part of the license plate, as occurs in the methods known in the prior art.

There is therefore a need not satisfied by the methods known in the prior art to create a method for detecting and reading license plates which is particularly effective in identifying license plates, especially which can be used in combination with video signals acquired from one or more cameras not specifically set up for detecting license plates, but used for various surveillance activities.

The present invention achieves the above objects by obtaining a method as described above, in which a calibration step is envisaged prior to the acquisition step, aimed at obtaining information related to the scene to be shot by the camera.

Therefore, the method of the present invention is based on prior knowledge of the scene, so as to predict the shape of the license plate at each point of the image.

In fact, the calibration step allows to apply this knowledge to the detection of the shape of printed text, i.e., of the letters and/or symbols shown on the license plate and to select the areas of the image which could be license plates.

As will be described in the following by the further features of the method of the present invention, once the portion of the image of interest has been selected, different processes will be applied with the aim of
- Estimating the direction of the vehicle
- Estimating the mounting inclination of the license plate
- Straightening the license plate using the a priori knowledge and estimates above, i.e., rotating the image containing the license plate in order to search for license plates which are as horizontal as possible using the a priori knowledge and estimates above,
- Recovering contrast even in the presence of lighting variations on the various areas of the license plate
- Reading the individual letters and deducing the license plate and the most probable country from defined patterns.

According to a possible embodiment, the calibration step includes determining at least the following variables:
- camera opening angle,
- angle between optical axis and horizontal plane,
- angle of rotation in the horizontal plane of the optical axis,
- three-dimensional position of the camera,
- slope of the road.

Such variables can be calculated alternatively or in combination and it is evident that they are variables related to the configuration of the scene to be captured, functional to predicting the behaviour of the vehicle which is stopped or in transit and consequently estimating the possible movement of the license plate installed on board.

Being able to follow the movements of the license plate is a particularly important aspect so as to be able to shoot and identify the largest number of frames which allow an effective reading of the characters on the license plate.

Advantageously, the determination of the variables described above includes creating a reference system, through the following steps:
- detecting the position of recognizable points in the field of view of the camera,
- identifying the position of the camera support pole,
- collecting information related to the installation of the camera,
- calculating the camera offset with respect to the pole.

Preferably the recognizable points can be fixed, static points, so as to make a fixed reference to aid in the calculation of the different distances.

According to a refinement of the method of the present invention, the calibration step comprises a step of selecting a part of the camera shooting area in which to acquire the images.

Such a feature allows to eliminate from the processing all those areas protected by privacy or the areas in which a vehicle no longer physically passes, so as to reduce the computation burden.

According to an embodiment of the method object of the present invention, it is possible to envisage that the step of processing the video stream comprises an estimate of the movement of the vehicle, carried out by calculating at least two parameters: the change of the vehicle direction and the change of the license plate inclination.

The processing of images derived from the video stream, preferably carried out via software, therefore "expects" to have to process a certain area of the image, in particular the area in which the license plate can be found in the frame following the one examined.

Advantageously, it is possible to envisage rotating the image, so as to eliminate the inclination of the license plate in the image based on the rotation prediction derived from the counts using the calibration procedure.

As is clear from what has just been described, the prediction and a priori knowledge are fundamental aspects of the method object of the present invention, both for a reduction of the computational burden, and to be able to carry out real-time detections and readings of license plates.

According to an improvement, the calculation of the two parameters described above includes a step of detecting the road axis and plane, so that the parameter of vehicle direction variation is calculated based on the most probable vehicle direction, while the parameter of license plate inclination variation is calculated based on a range of values between + and - 30 degrees of inclination, preferably between -5 and + 24 degrees of inclination, with respect to the line normal to the road plane.

According to a possible embodiment, the method comprises an offline step for determining the most likely directions of the cars, from one to three directions, and a selection of two inclinations of the license plate with respect to the vertical inclination.

During the setting up step, all the possible forms of the license plate will be calculated, based on the two calibration parameters.

When the license plate is identified, the real direction of the car will be determined and the most likely inclination of the license plate will be found with the system of white columns, described below.

According to a preferred embodiment, the detection of the license plate is carried out based on the letters and symbols present on the license plate.

In particular, the processing step comprises detecting the shape of the letters and/or symbols of the license plates.

Through the following illustration of an exemplary embodiment, some specific processes for detecting letters will be described.

According to a further improvement, the step of processing the video stream comprises a step of filtering each image of the video stream, carried out through a filter consisting of a horizontal window of limited length which is slid along each image of the video stream, calculating the convolution thereof.

The filter is constructed through specific features which will be described later, but from a general point of view, the filter is aimed at identifying the transitions from white to black and vice versa.

Combined with such a filter is a preprocessing of the image to be filtered, which involves reversing the greyscale of the image.

As a result, the image will have license plates with white letters on a light background.

Advantageously, the filter is chosen based on the estimate of the vehicle movement, i.e., based on the most likely direction(s) of the vehicle and based on the geometric features of the license plate.

According to a preferred embodiment, the pixels of the images resulting from the filtering step are subjected to a dilation filter sized on the maximum distance between two letters of the license plate.

Furthermore, the pixels obtained are grouped by proximity so as to calculate the geometric features of the shapes identified by the grouping to identify one or more letters or symbols.

Finally, it is specified that the isolated images at the processing step are processed through the following steps:
- rotating the image according to the inclination of the license plate,
- detecting the white vertical columns of the image.

These and other features and advantages of the present invention will become clearer from the following description of some exemplary embodiments illustrated in the accompanying drawings in which:
figure 1 shows a concept diagram of a possible image processed by the method object of the present invention;
figures 2a to 2g show some flow charts adapted to illustrate a possible embodiment of the method object of the present invention.

It is specified that the figures attached to the present patent application show some embodiments of the method object of the present invention in order to better understand its advantages and features.

Therefore, such embodiments are to be understood as purely illustrative and not limiting to the inventive concept of the present invention, namely to obtain a method for detecting and reading license plates which allows to read the license plates on board vehicles in real time and in a particularly efficient and effective manner, through an a priori knowledge of the camera shooting scene.

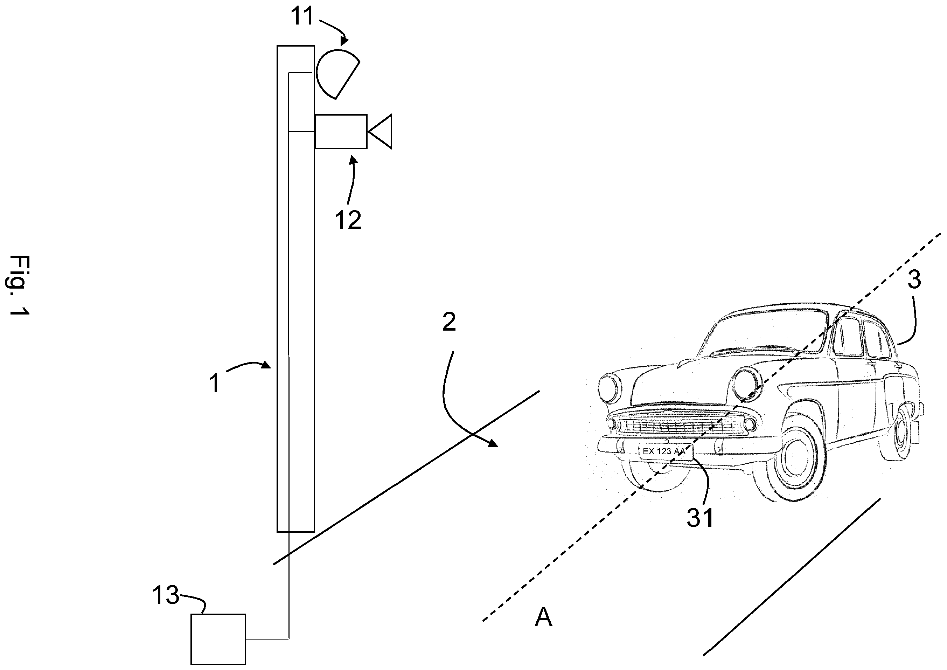

With particular reference to figure 1, a typical camera scene is illustrated, in particular an image belonging to a video stream related to the transit of a vehicle 3 along a road 2.

Along the road 2, a support pole 1 is installed which is adapted to support a public lighting lamp 11, on which a camera 12 is installed.

The camera 12 is aimed at shooting the scene, not focused on the car 2, but has an opening such as to shoot the entire image illustrated in figure 1.

Such an image therefore constitutes a frame of the video stream acquired by the camera 12 which will be processed in order to identify the license plate 31 mounted on the vehicle 3, as well as all subsequent frames, related to the movement of the vehicle 3.

It should be specified that figure 1 illustrates a single camera 12 and a single vehicle 3, but the method object of the present invention can process video signals from multiple cameras, as well as detect and read more than one license plate and of different types, without substantially modifying the steps which will be described below.

It should further be specified that in figure 1 a front view of the machine is illustrated, capable of reading the front license plate 31, however, as will be clear from the following description, the method object of the present invention can envisage detecting both front and rear license plates.

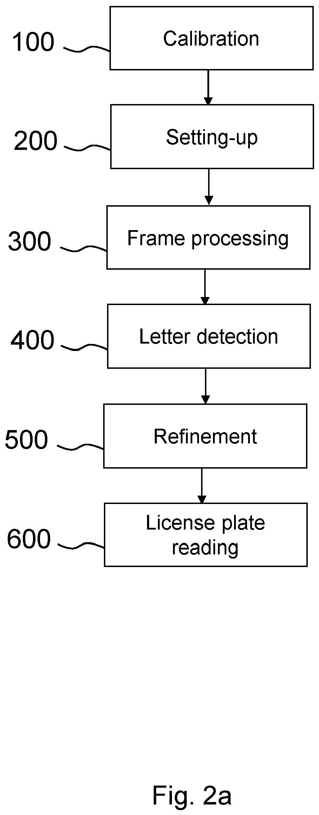

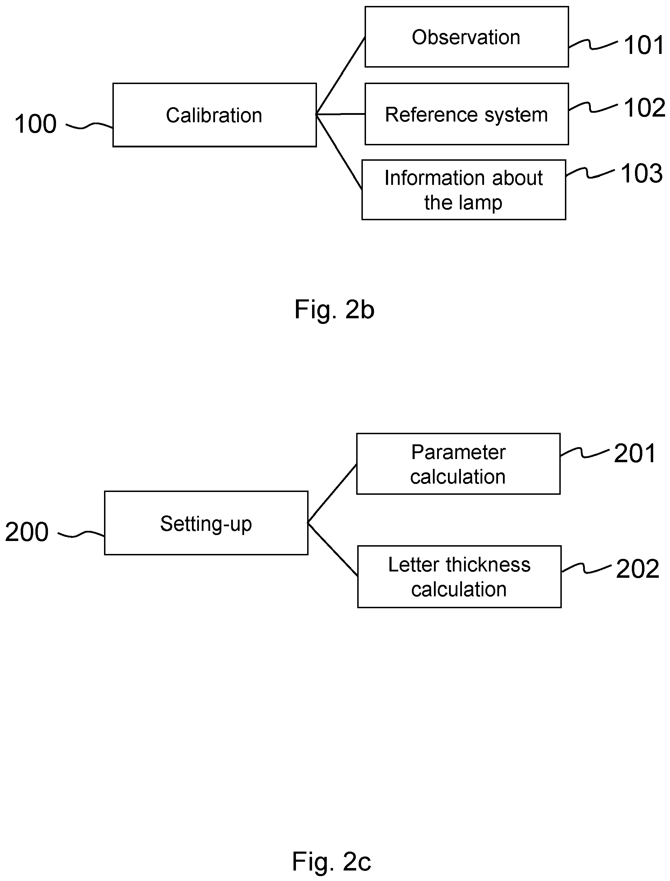

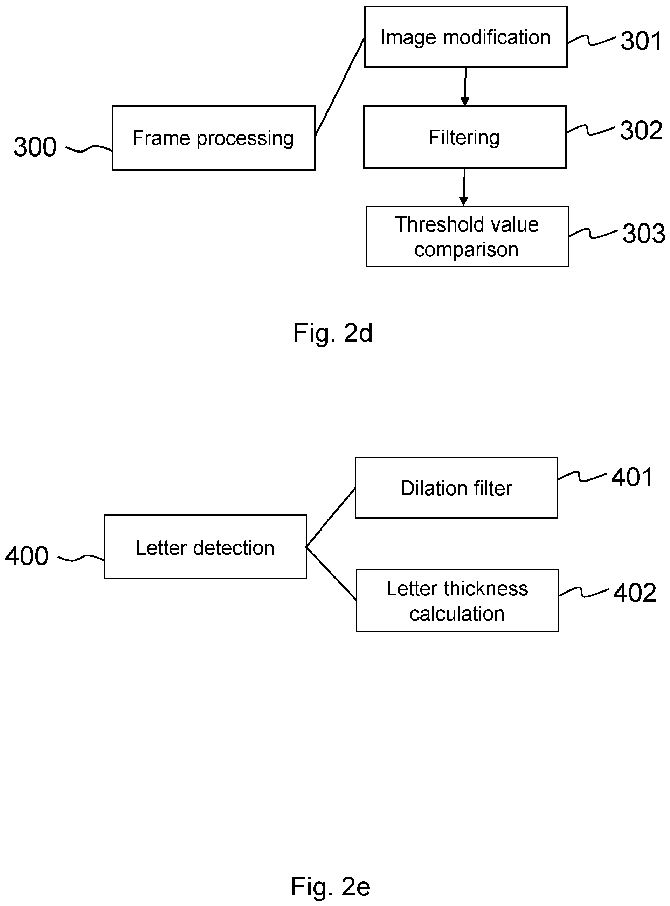

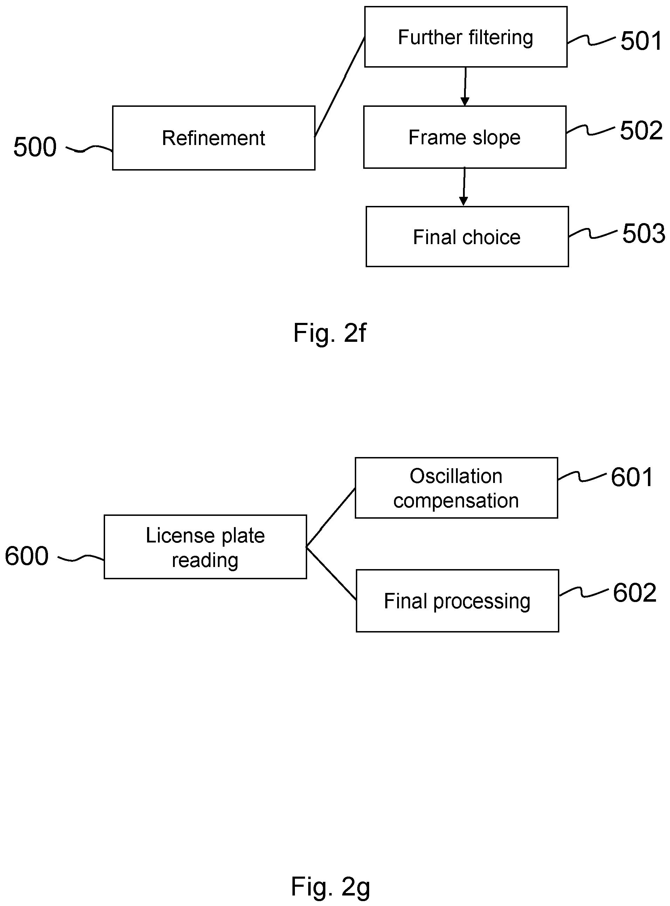

Advantageously there is a remote unit 13 connected to the camera 12 adapted to process the video stream acquired by the latter: in fact, the remote unit 13 has processing units aimed at performing the steps of the method object of the present invention, of which a possible embodiment is illustrated in figures 2a to 2g.

With particular reference to figure 2a, the method object of the present invention is illustrated divided into six macro steps:
a calibration step 100,
a setting-up step 200,
a frame processing step 300,
a step of detecting the set of letters 400,
a refinement step 500,
a license plate reading step 600.

Such steps will be described in detail, with particular reference to figures 2b to 2g.

In particular, the calibration step 200 aims to estimate:
- Opening angle of the camera 12
- Angle between optical axis and horizontal plane
- Angle of rotation in the horizontal plane of the optical axis
- Three-dimensional position of the camera 12
- The slope, value and direction of the road 2

The method includes the choice of an arbitrary reference system 102 to which all the variables are to be referred.

Before the installation of the camera 12, an observation step 101 and study of the area of interest to the scene will detect the position of recognizable points in the field of view of each camera, as well as the position of the pole 1 which will support the lamp.

The recognizable points, not shown in figure 1, can for example consist of architectural elements, trees, or specific points chosen by the user and indicated to the processing unit of the remote unit 13.

The information 103 related to the installation of the lamp 12 is then collected, such as the type of support and the type of lamp 12 to calculate the offset of the camera 12 with respect to the position of the pole 1.

During the calibration step, the method uses such knowledge and the position in the image of the recognizable points to calculate the previously reported variables.

As anticipated, it is possible, when installing cameras in areas with privacy constraints, to define the area of the shot image to be processed and in which to search for license plates.

Once the calibration step 100 has been completed, the method of the present invention includes a setting-up step 200 during which the geometric features of the image of the license plate 31 at each possible position of the image are calculated by varying two parameters 201, in particular the direction of the vehicle 3 and by varying the mounting inclination of the license plate 31. Sample values are chosen for these two parameters to limit the duration of the step.

Advantageously, the most likely directions are determined by acquiring videos and using software tools to calculate the direction of the car shot and displaying all the calculated directions on a single image of the scene.

The final choice of directions can occur manually or automatically, starting from the image just described.

If the camera 12 is very angled with respect to the axis A of the road 2, one of the two corners can exit the field of utility and in this case the license plate 31 would be too deformed to be read.

Consequently, in this case, in addition to the road direction, two angles promoting the framing will also be chosen.

With regard to the mounting inclination of the license plate 31, two values were chosen corresponding to the values most frequently used by car manufacturers.

A possible activity of this step is the preparation of the data used in the grid search of potential license plates. This is the calculation of the thickness 202 of the vertical section of a letter as the position of the projection of the license plate 31 in the frame changes. This calculation considers the vehicle 3 oriented according to the axis A of the road 2 and with a more probable mounting angle.

A three-dimensional surface is obtained with a level trend greater than the second. Then this surface is intersected with a bundle of horizontal planes placed at heights defined by the design. For example, in a typical installation at 6 metres, 4 parallel planes are defined.

Then the points of the image in which the projected section falls between a specified pair of planes are identified and the overall dimensions are obtained. The image of a frame will thus be divided into irregularly shaped areas marked by a certain range of section thickness values.

All the calculated variables are defined for both the front and rear license plates.

For reasons of computational efficiency, it is possible to develop the counts only in the crossing positions of a grid at 10px x 10px: all values around + or - 5px at a vertex will use the same reference values.

Following the setting-up step 200, the frame processing step 300 is envisaged, which includes selecting the areas of the image which can contain the license plate 31.

According to an implementation variant, after such a step, a step related to the rotation of the image can be included.

In fact, in accordance with such a configuration, for each preferred direction, previously calculated, the method object of the present invention decides if it is
necessary to rotate the image or not, so as to process images which have the license plates oriented in as horizontal a direction as possible.

The selection of the areas of the image which can contain the license plate 31 is carried out through a filtering step 302, in particular by sliding a horizontal filter of limited length on each line of the image and calculating the convolution. The filter preferably responds to the following features
- Rewards the areas of the image where it detects a white/black/white transition of the width of the section thickness defined for that area,
- Punishes continuous lines
- Not sensitive to small variations in grey levels
- Does not respond to wider or narrower white/black/white variations than that required,
- Responds even if the contrast between white/black/white is not particularly high
- Also rewards very contrasting transitions and hardly contrasting transitions.

The filter output is compared to a threshold value, step 303 and only the points with a higher value are promoted as potential "letter" candidates.

In order to apply this filter, it is preferable to modify the image, step 301, turning the image and reversing the greyscale.

White letters are then sought on a black background: more importance is thereby given to the letters than to the background.

In order to detect both well contrasted letters in the presence of good lighting, and poorly contrasted letters due to too much or too little lighting, it is necessary to calculate average and variance under the filter and apply the same to the difference between the pixel value and the average value.

Thresholds are applied to the absolute grey value which falls in the 'letter' part of the filter, to the variance and to the average to a priori discard the areas which are not interesting, saving the time required for the computation. Following the step just described, the detection step of the set of letters 400 which make up the license plate 31 is included.

In this step, the pixels of the image which have responded to a filter are compared with their outline: the areas where the potential characters are aggregated are searched.

To do this, preferably a dilation filter, 401, is used, sized on the maximum distance between two letters of the license plate for the type of license plate, in the position of the image in question.

The distance is calculated in the most unfavourable case: for example, for an Italian license plate, the distance between the belly of the C in second position and the belly of the number 5 in third position.

Next in step 402, the points thus obtained are grouped by proximity (8 connected) and the geometric features of the shapes thus identified are calculated. These are compared with the theoretical values defined during the setting-up step 200, to discard the false positives.

The orientation of the axis of the ellipse which best encloses the shape is determined to deduce the orientation of the long side of the license plate 31.

In the refinement step 500, each area of the image which has been identified in the previous steps is further analysed to confirm its candidacy.

The image is then processed again through a further filtering step 501, in particular:
- proceeding to the equalization of the image
- the license plate is straightened only based on the direction of the long side, as the license plate is still downcast,
- reapplying the convolution filter described above and the dilation on the result,
- Recalculating the geometric parameters and comparing them with the nominal ones.

In this step, it is possible to delete the areas of the image which contain the contour mouldings of the license plate: they can respond to the horizontal search filter in the original image, but will no longer be visible by the filter after the first rotation.

The step just described can be preceded by a further processing step which includes isolating each area of the image which contains a possible candidate for the recognition of the license plate.

Each identified area will then be processed separately through the filtering step 501.

The refinement step also includes a step of calculating the inclination of the license plate frame, step 502.

In this step, the image is deformed by applying the geometric transformations corresponding to a frame inclination value between a predefined set and all the knowledge acquired so far on that potential candidate.

The deformations are compared with each other to choose the "straightest" one. For this purpose, a search and counting algorithm of the white vertical columns has been devised: the image with the straightest license plate will have the greatest number of white columns.

It is evident that this step is dependent on the contrast throughout the image of the license plate and the homogeneity of the lighting. Traditional contrast enhancement methods cannot work in strong light and shade. Shadow suppression systems create spurious edges between shaded and light areas after equalization.

The solution devised is based on multiple iterations in which the histogram of the image is analysed in search of the grey values of the letters and the background. These values are then moved in opposite directions in order to improve the contrast. It also keeps track of the amount of saturated pixels in order to avoid unnatural, overly light or overly dark images.

In all these steps, only the central part of the image of the license plate 31 is used, i.e., the part which contains only the characters, to avoid deviating contributions from the contours (e.g., the lateral blue bands).

The calculation of white columns, i.e., the spaces between characters, is regulated by the threshold used to distinguish the letters from the background.

Such a threshold is calculated based on the average value of the grey levels of the points which responded to the filter.

At the end of this step, the best estimate of the direction of the vehicle 3 and the inclination of the frame is known. It is then possible to proceed to the final choice 503, through a final straightening, to cutting the license plate only and to the final equalization.

The license plate reading step is preferably carried out through OCR algorithms known in the prior art, preferably OCR algorithms trained in small characters (9pt). The result is expressed as a series of license plates and probabilities.

According to a possible embodiment, it is possible to include that such a step 600 comprises further processing related to the compensation of the oscillations of the camera, 601.

In this case, the method calculates a set of features which are automatically detected in each frame. It then searches for correspondences between successive frames and calculates the rototranslation matrix which satisfies several matches (in fact, some points may have moved by their own motion, but it is assumed that the majority only moved in apparent motion).

Such a matrix is applied to the calculated data in the setting-up step 200, to be consistent with the data in the frame.

Finally, according to the variant illustrated in figure 2g, it is possible to include a final processing step 603, of the collected data.

The method of the present invention processes the result of the search and reading of license plates frame by frame, correlating the individual readings in time and space: in fact, each license plate read has a coordinate in pixels and an instant of time.

By following the positions of the license plates over time with a Kalman matrix, it is possible to associate the subsequent readings of the same object and group the results of the readings. Thereby errors due to changes in brightness or partial darkening can be compensated by the correlation.

This method level also operates between multiple cameras allowing to follow the same object along its path for the entire road.

Furthermore, it is possible to apply temporal concepts, such as transit bans, or searches for suspicious license plates in this step.

Finally, from what has just been described, it is evident how the method of the present invention allows to obtain:
- List of readings organized in time and in space
- Set of cuts of the image stops with the license plate in b/w straightened and equalized for better operator reading
- Presence or absence alarms
- Possible recording of video sequences
- Management of user profiles and control of access to data
- Elimination of old data according to the configured profile.

While the invention is susceptible to various modifications and alternative constructions, some preferred embodiments have been shown in the drawings and described in detail.

It should be understood, however, that there is no intention of limiting the invention to the specific illustrated embodiment but, on the contrary, it aims to cover all the modifications, alternative constructions, and equivalents falling within the scope of the invention as defined in the claims.

The use of "for example", "etc.", "or" refers to non-exclusive non-limiting alternatives, unless otherwise stated.

The use of "includes" means "includes but not limited to", unless otherwise stated.

## Claims

1. Method for detecting and reading license plates (31) installed on board vehicles (3) in transit or stopped along a road (2),
comprising the following steps:
- acquiring a video stream by at least one camera (12), which camera (12) is installed on a support pole (1),
- processing said video stream in order to select images of the video stream depicting one or more license plates (31),
- recognizing one or more license plates (31),
**characterized in that** a calibration step (100) is included prior to the acquisition step, aimed at obtaining information related to the scene to be shot by the camera (12).

2. Method according to claim 1, wherein the calibration step (100) includes determining at least the following variables:
- opening angle of the camera (12),
- angle between optical axis and horizontal plane,
- angle of rotation in the horizontal plane of the optical axis,
- three-dimensional position of the camera (12),
- slope of the road (2).

3. Method according to claim 2, wherein the calculation of said variables includes obtaining a reference system (102), through the following steps:
- detecting the position of recognizable points in the field of view of the camera (12),
- identifying the position of the support pole (1) of the camera (12),
- collecting information regarding the installation of the camera (12),
- calculating the offset of the camera (12) with respect to the support pole (1).

4. Method according to claim 2, wherein said calibration step (100) comprises a step of selecting a part of the camera (12) shooting area in which to acquire the images.

5. Method according to one or more of the preceding claims, wherein the step of processing the video stream comprises an estimate of the movement (200) of the vehicle (3), carried out by calculating at least two parameters (201), which at least two parameters comprise one or more directions of the vehicle (3) and the inclination of the license plate (31), in order to calculate a priori the possible forms of the license plate at all points of the image.

6. Method according to claim 5, wherein a step of detecting the axis (A) and the road plane (2) is included, the parameter of vehicle direction (3) being calculated based on at least one more probable direction of the vehicle (3) and the license plate (31) inclination being calculated based on a range of values between + and - 30 degrees of inclination with respect to the line normal to the road plane (2).

7. Method according to one or more of the preceding claims, wherein the step of processing the video stream comprises detecting the shape of the letters and/or symbols of the license plates, based on the estimation of the movement (200) of the vehicle (3) .

8. Method according to one or more of the preceding claims, wherein the step of processing the video stream comprises a filtering step (302) of each image of the video stream, which step is carried out through a filter consisting of a horizontal window of limited length which is slid along each image of the video stream, calculating the convolution,
said filter being intended to identify transitions from white to black and vice versa,
a pre-processing (301) of the image to be filtered is included, which pre-processing involves reversing the greyscale of the image.

9. Method according to claim 8, wherein the filtering step is performed based on estimating the movement (200) of the vehicle.

10. Method according to claim 8, wherein the pixels of the images resulting from the filtering step (302) are subjected to a dilation filter (401) sized on the maximum distance between two letters of the license plate (31),
the obtained pixels being grouped by proximity so as to calculate the geometric features of the shapes identified by the grouping to identify one or more letters or symbols.

11. Method according to one or more of the preceding claims, wherein the images isolated in the processing step are processed through the following steps:
- rotating the image according to the inclination of the license plate,
- detecting the white vertical columns of the image.
